# EUROPEAN PATENT SPECIFICATION

(11) **EP 2 694 008 B1**
(45) Date of publication and mention of the grant of the patent: **17.12.2014**
(21) Application number: 12717482.9
(22) Date of filing: 30.03.2012
(51) Int. Cl.: A61G 5/10, B60B 33/04

(54) **WHEELCHAIR WITH ADJUSTMENT OF THE CASTOR WHEEL SWIVEL AXIS**
ROLLSTUHL MIT EINSTELLUNG DER ROLLENSCHWENKACHSE
FAUTEUIL ROULANT AVEC AJUSTEMENT DE L'AXE DE PIVOTEMENT DE ROUE PIVOTANTE

(30) Priority: 01.04.2011 EP 11160774
(43) Date of publication of application: 12.02.2014
(73) Proprietor: Invacare International Sàrl, 1196 Gland (CH)
(72) Inventor: KÜSCHALL, Rainer, CH-4123 Allschwil (CH); BRENNER, Simon, CH-4054 Basel (CH)
(74) Representative: Ganguillet, Cyril
(86) International application number: PCT/IB2012/051565
(87) International publication number: WO 2012/131642

(56) References cited:
- WO-A1-2006/036429
- DE-U1- 29 817 702
- US-A1- 2006 087 098

## Description

### Technical Field

The present invention relates to a wheelchair, in which the angular position of a swivel axis of a castor wheel with respect to the frame of the wheelchair is adjustable, preferably in a continuous, step-less manner.

### Prior Art and the Problem Underlying the Invention

The present invention generally addresses problems associated with the adjustment of a wheelchair. More particularly, the invention addresses the problem associated with the adjustment of the swivel axis of castor wheels in wheelchairs.

The problem underlying the present invention is also discussed in EP 1872761. For a wheelchair to have good, correct driving characteristics, it is important that the swivel axis of the castor wheels is as close to the vertical as possible. If this axis is not vertical, the wheelchair may exhibit vibrations when driving and manoeuvrability is impaired, basically because, the power ratio is not optimal as mechanically unfavourable forces are exerted on the swivel axis and/or its housing.

On the other hand, various wheelchairs characteristics need to be adjustable to the user preferences and body size. For example, the height and the position of the seat can generally be adjusted, or the position of drive wheels with respect to the frame can be adjusted. This may involve adjustment of the wheelbase (adjustment of the drive wheel along a horizontal, rear-to-front axis), the tendency of a wheelchair to tilt back and/or the height of the frame with respect to the ground level. There are many possibilities available in the prior art for adjusting the position of the drive wheels with respect to the frame. One such possibility is provided by adaptor plates, also called wheel mounting plates, which are fixed to the frame, said plates comprising a plurality of holes for receiving the wheel axle, as can well be seen, for example, in US2005121961. Another approach for positioning the drive wheel with respect to the frame is disclosed in EP0585197. In European patent application EP 10 193680.5 filed by the present applicant an adjustment mechanism allowing for continuous, step-less, or nearly so, adjustment of the position of a drive wheel with respect to the frame is disclosed.

In many instances, the above mentioned adjustments made with respect to the drive wheels or with respect to the seat, or other adjustments not specifically named herein, may have an impact on the situation of the frame and/or may thus also change the angular position of the castor wheel swivel axis, moving the latter out from the vertical orientation.

It is thus necessary to have a mechanism that enables an adjustment of the swivel axis of castor (or other possibly swivelling) wheels, in particular the adjustment of the angular position or orientation of the castor wheel swivel axis with respect to the frame of the wheelchair or other structural element of the wheelchair to which the castor wheels are attached.

The adjustment of the castors with respect to the frame should, advantageously meet the following requirements.

The adjustment of the castor wheels should be reliable and constant. In particular, a change of the angular position of the swivel axis due to prolonged driving or due to small impacts and other forces on the chair occurring during normal driving should be prevented.

Furthermore, the adjustment should ideally be continuous, step-less, in contrast to the adjustment as disclosed in EP1872761, based on an eccentric, which is discontinuous, allowing adjustment only at angular intervals of about 1.5°.

In addition, the angular adjustment of the castor wheels (or, more precisely, of the swivel axis thereof), can advantageously be accomplished quickly. Furthermore, it is an objective to provide a mechanism that does not look clumsy or complicated. For example, it is an objective to enable adjustment of the position of the castor wheels with respect to a frame without need of comparatively large screws or nuts, visible from the perspective of a user or an observing, outstanding person. Preferably, the mechanism does not distinguish or stick out from the overall design of the wheelchair. It is thus an objective of the invention to provide a mechanism for adjusting the angular position of a castor wheel with respect to the frame of a wheelchair, which mechanism is suitable to integrate in an overall elegant, smooth, simple and possibly sportive-looking wheelchair frame.

It is noted, in this regard, that there are several general principles for attaching the castor wheels to a wheelchair frame. In EP1872761, an overall hollow cylindrical castor attachment unit is employed, which harbours the ball-bearings of the swivel axle, and also the swivel axle itself. According to this patent document, the position of the entire castor attachment unit can be fixed in an adjustable way to the front, bottom end of the frame of the wheelchair. While such a mechanism should be also encompassed by the present invention, it is also an objective to provide a mechanism for adjustably attaching the castor wheels to an overall cylindrical attachment unit that is fixed in non-detachable manner, for example by welding, to the frame. In other words, it is an objective to provide an adjustable positioning of the castor wheels without the need of a detachable and/or separate castor wheel attachment unit. WO 2006/036429 relates to a castor wheel assembly for a wheelchair comprising a caster swivel post pivotable in forward and rearward directions about a pivot axis transverse to the caster swivel post, and a caster fork supported for rotation relative to the caster swivel post and rotatably supporting a caster wheel, the caster swivel post being selectively pivotable about the pivot axis transverse to the caster swivel post and held in a fixed position. Said castor wheel assembly comprises also a spline assembly comprising an upper spline that is in fixed relation to a housing and a lower spline that is in a fixed relation to the caster fork, teeth on the lower spline being adapted to lock into engagement with the mating teeth on the upper spline, fixing the angular position of the caster swivel post. However, this solution does not permit a continuous, step-less manner adjustment of the angular position of the caster swivel post.

To put it again to another perspective, it is an objective of the present invention to provide a mechanism that allows the adjustment of the position of castor wheels in a wheelchair that has originally been conceived as a custom-made, non-adjustable wheelchair.

The present invention addresses the problems depicted above. The problems and objectives set out herein above are part of the present invention.

### Summary of the Invention

Remarkably, the inventors provide a mechanism for adjusting the angular position of a castor wheel swivel axis with respect to a frame of a wheelchair, in a continuous, step-less manner or nearly so. In this way, it is always possible to adjust the swivel axis to a vertical position, regardless of other adjustments made to the wheelchair, affecting the position of the frame and eventually of the castor wheel swivel axis.

In an aspect, the present invention provides a wheelchair, in which the angular position of a swivel axis of a castor wheel with respect to a frame element of the wheelchair is adjustable in a continuous, step-less manner. In an embodiment, a transversal axle provides a pivotal connection of a castor wheel assembly to said frame element, thereby allowing pivoting of the assembly in a substantially vertical plane extending in a rear-to-front (longitudinal) orientation, and wherein at least one adjustable blocking mechanism is provided so as to prevent said assembly from pivoting in said vertical plane and so as to achieve an adjustment of the angular position of said castor wheel swivel axis.

Said blocking mechanism comprises a rear screw and a front screw, each of said screws being inserted inside a thread provided in said frame element, said screws being arranged so as to be coaxial and so that the heads of said screws are oriented in opposed directions, the free ends of said screws abutting against said bar of said castor wheel assembly.

According to an embodiment of the wheelchair, said frame element to which said castor wheel assembly is adjustably connected comprises a housing rigidly connected to the frame of the wheelchair, wherein said castor wheel assembly comprises a bar defining the swivel axis of the castor wheel, wherein said bar is adjustably harboured in said housing.

According to an embodiment, said castor wheel assembly comprises a bar defining the swivel axis of the castor wheel, said bar being rotably connected to a fork of the castor wheel, and said bar comprising an opening through which said transversal axle passes, thereby connecting the castor wheel assembly to the frame element.

According to a further embodiment, at least one blocking mechanism is configured to position the castor wheel assembly alternatively in a blocked position, wherein said castor wheel assembly is prevented to pivot in said vertical plane having a longitudinal, rear-to-front or front-to-rear orientation, and in an at least partially unblocked position, wherein said castor wheel assembly is free to pivot at least to some extent in said vertical plane having a longitudinal, rear-to-front or front-to-rear orientation.

According to an embodiment, said bar comprises two substantially flat, left and right, opposed sides, said sides respectively abutting against left and right wall building structures of said housing element so that said bar is blocked from rotation and/or translation toward any one of the right or the left sides.

Further features and advantages of the invention are described in the appended claims.

### Brief Description of the Drawings

**Figure 1** is a lateral view to the left side of a wheelchair according to an embodiment of the invention.
**Figure 2** is a closer perspective view to the frame-and-castor wheel assembly of the wheelchair shown in Figure 1, the castor wheel itself being removed for reasons of clarity.
**Figure 3** is a longitudinal transversal section through the frame-and-castor wheel assembly shown in Figure 2.
**Figure 4** is the same as Figure 2, with arrows indicating the possibilities of adjustments of the angular position of the castor wheels.
**Figure 5** is similar to Figure 3, with arrows indicating the possibilities of adjustments of the angular position of the castor wheels.
**Figure 6** is a bottom-up view on a cross-section as indicated by the line B-B and the arrows in Figure 3.

### Detailed Description of the Preferred Embodiments

The present invention provides a wheelchair comprising castor wheels, wherein a position of said castor wheels, and in particular the angular position of the swivel axis thereof, is adjustable.

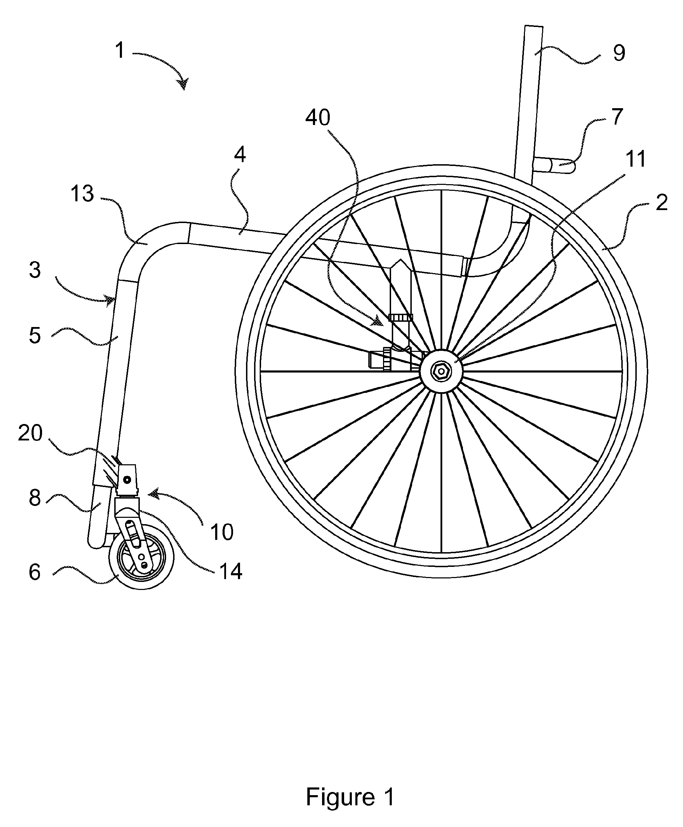

For the purpose of the present specification, situations and directions of structures and elements of the wheelchair of the present invention are determined by the perspective of a user seated in the completely assembled vehicle. Accordingly, in Figure 1, the left side of the wheelchair frame is seen. Situations or directions "up" or "top" and "down" or "bottom", "rear" or "back" and "front", "behind" and "in front", "distal" and "proximal", "lateral" and "central" follow the same principle.

Figure 1 shows the left side of a frame of a wheelchair 1 with a large, left drive wheel 2 and a left castor wheel 6, attached to the frame. Figure 1 only shows the left side of a wheelchair frame. As the skilled person understands, the complete wheelchair has a plane of symmetry, which extends vertically and centrally on the rear-to-front (and front-to-rear) axis of the wheelchair. Many elements are thus present in pairs, such as the drive wheels 2, the castor wheels 6 and lateral frame profiles 3, for example, as is generally mentioned in this specification, while using only one reference numeral. The two lateral frame profiles 3 are connected by way of transversal, substantially horizontal frame profiles, which are, however, not relevant for understanding the present invention.

The entire assembly shown in Figure 1 is designated with reference numeral 1, referring to a wheelchair, although several elements have been omitted for reasons of clarity. In particular, a seat is not shown. The seat is to be attached on left and right lateral frame profiles 4 extending on a longitudinal, rear-to-front direction of the wheelchair.

The frame shown in Figure 1 has a simple, light design, and substantially comprises or consists of a pair of lateral frame profiles 3, each of which comprising an upper, longitudinal frame profile 4 and a frontal, substantially vertical profile 5, which are connected by a bend 13. In the embodiment shown, the upper longitudinal profile 4 and the frontal profile 5 are provided as one single, bent profile. Also a pair of left and right back profiles 9 are also present, which are adapted to support a seat back.

For the purpose of the present specification, the expression "longitudinal" generally means that the respective element extends at least to some extent, but preferably to a substantial, more preferably a major extent, most preferably exactly in the rear-to-front or front-to-rear orientation or direction. In this way, the term "longitudinal" does not distinguish between rear-to-front and front-to-rear, but encompasses both possibilities likewise.

For the purpose of the present specification, the expression "transversal" generally means that the respective element extends at least to some extent, but preferably to a substantial, more preferably a major extent, and most preferably exactly in the left-to-right or right-to-left orientation or direction. In this way, the term "transversal" does not distinguish between left-to-right and right-to-left, but encompasses both possibilities likewise. According to an embodiment a transversal structure also is substantially horizontal.

The kind of frame shown in Figure 1 is frequently used for custom-made wheelchairs, which do, in the prior art, not provide for the possibility of an adjustment of the position, in particular the vertical and/or horizontal, longitudinal position of the wheels, such as the drive wheels 2. It is considered helpful, for the understanding, to illustrate the invention at the example of such a basic frame structure. However, the invention is applicable to other wheelchair types and other frame structures. For example, the invention also applies to wheelchairs having a pair of an upper and lower longitudinal frame element on each left and right side, as frequently found with foldable wheelchairs, for example. The invention also applies to non-custom-made, but adjustable wheelchairs. Adjustable wheelchairs are wheelchairs of which the wheelbase, the height of the frame from ground level and other parameters as disclosed elsewhere in this specification can be adjusted in accordance with a user's preferences.

For the purpose of the present specification, the term "frame" generally refers to the structural element of a vehicle that fulfills the purpose of support and/or carrying structure. In general, the frame preferably is the structural element to which at least one pair of left and right wheels, but preferably two pairs, rear and front, of left and right wheels are directly or indirectly connected. The frame is thus connected to the axle bearing structure of a wheel. In the embodiment shown in the figures, the castor wheels 6 are also connected to the frame.

In wheelchairs, the frame is generally also the support structure for a seat, a seat chassis or for a structure carrying the seat chassis. Also the footrest is generally connected to the frame.

In some vehicles, the term "chassis" would be more appropriate than "frame". Generally, a chassis fulfils the same or similar functions as the frame as referred to herein and the terms chassis and frame are thus considered generally equivalent for the purpose of the present specification. For example, in motorized wheelchairs, the term "chassis" is more frequently used. The present invention applies to hand-propelled wheelchairs (as shown in the figures) but also to motorized wheelchairs.

Since in the wheelchair of Figure 1 the position of the drive wheels is adjustable, there is a need for adjusting the castor wheels, and in particular the angular position of the swivel axis of the castor wheels. The position of the drive wheels 2 can be adjusted horizontally along a longitudinal axis and vertically with respect to the frame of the wheelchair, thereby changing also the position of the overall frame 3 with respect to the ground level or horizontal in general. The mechanism 40 for adjusting the position of the drive wheels 2 of the wheelchair shown in the figures is disclosed in the co-pending application EP 10 193680.5, and enables adjustment of the wheelbase of the wheelchair and other important driving characteristics, such as the tendency to tilt backwards and others. Other mechanisms for adjusting the drive wheel position could be used, such as the use of adaptor plates, also referred to as wheel mounting plates, or any other system, such as the one, for example, disclosed in EP0585197. The present invention is thus not limited to any specific way of adjusting the drive wheels with respect to a frame, but more specifically addresses the adjustment of the castor wheels, which generally becomes necessary due to the adjustment of the drive wheel in general.

The two lateral, left and right frame profiles 3 are connected to each other by a back support arrangement 7 at the rear end, by the footrest 8 at the front end, and by the drive wheel axle bearing tube (not shown), which is transversal and which harbours the axles of both, the left and right drive wheels. The transversal drive wheel axle bearing tube cannot be seen in Figure 1, as it extends exactly perpendicular with respect to the plane of Figure 1 and since it is covered by hub 11. Also the footrest 8 and the back support arrangement 7 have transversally extending elements, thereby stabilising the lateral frame parts 3. In Figure 1 it can be seen that the footrest 8 is inserted in an opening provided at the bottom end of the vertical frame profile 5. Of course, an according connection is provided on the right side of the wheelchair.

An overall frame-and-castor wheel assembly is indicated with reference number 10. On the right side of the wheelchair, a corresponding assembly is present. The frame and castor wheel assembly 10 comprises frame elements (in particular element 18) as well as the castor wheel assembly 12, the latter comprising in particular the fork 14 turnably holding the castor wheel 6, as shown in greater detail in the following figures.

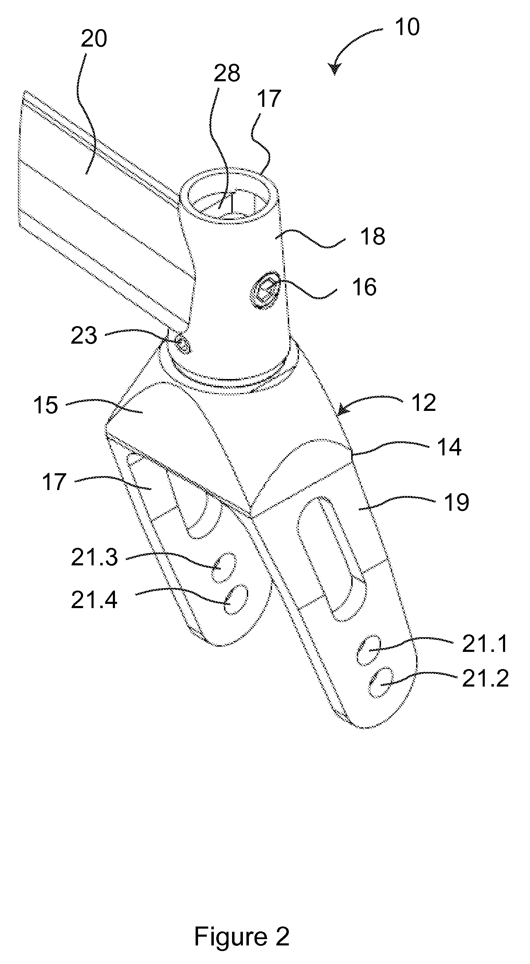

In Figure 2, the castor wheel assembly 12 as such can be seen to be connected to a housing 18 of the frame, said housing having the form of a hollow cylindrical and, on the outside, a slightly conical tube, extending along a substantially (but not necessarily exactly) vertical axis. The housing 18 is rigidly connected to the frame of the wheelchair. In the embodiment shown in Figure 2, the housing 18 is welded to a connection profile 20 and therefore considered to be part of the frame with respect to the embodiment shown. The connection profile 20 is in turn welded to the substantially vertical part 5 of the frame profile 3, close to the lower end of the frame profile 5 (Figure 1).

The housing 18 does not need to be necessarily connected to the frame profile 5 by a welded connection, other rigid connections could do as well, for example also detachable connections. Of course, the absence of any visibly screws typically used for such connections give the wheelchair shown in the figures a particularly light and sports-like design. In case the housing is not welded to the frame, but attached by way of screws, for example, or any other detachable mechanism, the housing 18 would form part of the castor-wheel assembly as such and would not be considered to be part of the frame. The present invention encompasses both possibilities.

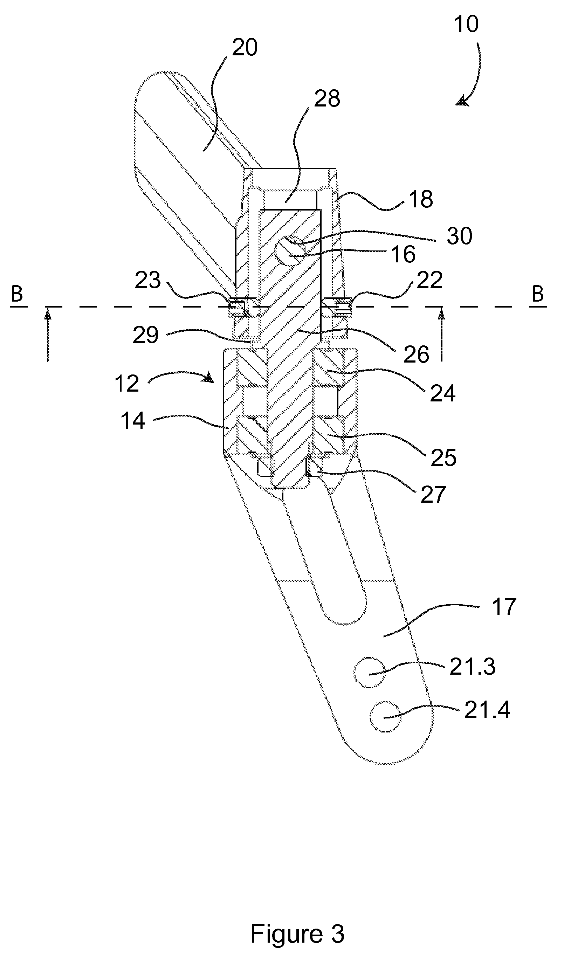

In the embodiment shown in Figures 2 and 3, the housing 18 is open towards the top for reasons of better understanding. During normal use, the circular opening 17 on top of housing 18 is covered by a cap (not shown). In Figure 2 a screw 16, in particular the head of an Allen screw 16 can be seen, the screw being inserted in the housing 18. Also a further, smaller Allen screw 23 can be seen, situated towards the front of the housing 18.

With respect to the castor wheel assembly 12, in Figure 2 the fork 14 can be seen, which is adapted to rotably holding the castor wheel 6 (not shown). The fork 14 comprises an upper connection portion 15 connecting two lateral fork elements 17 and 19, the latter comprising bores 21.1, 21.2, 21.3, 21.4, suitable to fix the axle of the castor wheel at two different heights, in accordance with user preferences. The upper connection portion 15, in the embodiment shown, harbours ball bearings, for harbouring the fork 14 in a rotable manner as is typical for castor wheels. This will become better apparent from Figure 3 described below.

The longitudinal section of the frame-and-castor-wheel assembly 10 (Figure 3) shows how the castor wheel assembly 12 is connected in an adjustable manner to the housing 18, which, in the embodiment shown, is part of the frame 3 of the wheelchair. Figure 3 is in particular a longitudinal section extending along the longitudinal orientation, centrally through the housing 18.

Figure 3 thus reveals that the castor wheel assembly 12 comprises a central, substantially vertical bar 26, which, at its lower section, has the form of an axle and is tightly harboured in two ball bearings 24, 25. The ball bearings are placed in the upper connection portion 15 of the castor wheel assembly and are fixed in place by way of the structural geometry of the portion 15, and by way of a collar 29 that is part of the bar 26, separating the lower and upper section of said bar. A nut 27 matches an external thread on the lower extremity of the bar 26. The nut 27 thus hold the entire fork 14 in its position, blocking the ball bearings 24 and 25 against the collar 29 on the bar 26. In this way, the rotation of the fork 14 of the castor wheel assembly with respect to said bar 26 is enabled. The rotation of fork 14 around the lower section, axle part of bar 26 makes it possible for the fork 14 to fulfil the swivel-function of the castor wheels, that is, the rotation with respect to an axis that is substantially vertical. The liberty to swivel enables the entire wheelchair to be steered by the user, in particular to change direction and to make turns with the wheelchair.

The attachment of the bar 26 to the housing 18 accounts for the adjustability of the angular position of the axle of the swivelling castor wheel assembly 12 with respect to the frame.

The upper section of the bar 26 comprises, at the upper end, a bore 30. The Allen screw 16, inserted through a thread in the housing 18 (Figure 2) is guided through said bore 30. The upper section of the bar 26 has a substantially rectangular cross section. As the Allen screw 16 is oriented in a substantially horizontal, left-to-right, more specifically transversal position, the entire bar 26 and the fork 14 attached to the bar are arranged in a manner so as to able pivot in the longitudinal direction, as will be described further below, with the axle of pivoting being formed by said Allen screw 16. It is noted that the screw or bolt 16 may be only partially threaded, so that the non-threaded part forms the axle of pivoting of the bar 26.

The pivoting of the entire castor wheel assembly comprising the bar 26, the ball bearings 24 and 25 as well as the fork 14, and the castor wheel itself (not shown in Figure 3) results in angular changes of the axis of the castor wheel swivel axle, which will be exploited for adjusting said angle in accordance with a user's preference.

The movement of pivoting of the castor wheel assembly 12 around the axis formed by screw 16 is in particular blocked in an adjustable manner. In the embodiment shown, the bar 26 is further blocked by two further screws, rear screw 22 and front screw 23. The position of front screw 23, inserted through a thread provided in the housing 18, is also seen in Figure 2. Rear screw 22 is positioned exactly so as to be opposed to front screw 23, the former also being inserted through an internal thread provided in housing 18, at the opposed side of said housing, as can be seen in Figure 3.

As the skilled person will understand, screws 22 and 23 are positioned so as to be able to block the pivoting movement of the bar 26 and/or the castor wheel assembly 12 at an angular position of interest. Said screws 22 and 23 thus form a blocking mechanism, whereby the housing 18, in particular the internal threading provided in said housing also can be seen to be part of the blocking mechanism. In the embodiment shown, screws 22 and 23 are exactly positioned in the plane in which said bar 26 and said castor wheel assembly 12 are arranged to be capable of pivoting due to the transversal axle formed by Allen screw 16. Furthermore, said screws 22 and 23 are arranged in the substantial longitudinal direction and substantially horizontally, so that, when screwed and/or unscrewed, they translationally move in said longitudinal (and horizontal) direction. Said screws further are arranged to be coaxial in the embodiment shown. Furthermore, if one draws an imaginary vertical and transversal plane between the central, proximal ends of screws 22 and 23, these screws appear as mirror images one with respect to the other. The heads of screws 22 and 23 are oriented (in said housing 18) in opposed directions, so that the screw ends face each other. It is noted that the "end of a screw" or "screw end", for the purpose of the present specification, is considered to be the extremity of the screw that is opposed to the screw head.

The respective ends of said screws 22 and 23 are arranged so as to face each other, the bar 26 being situated in between said ends, and said rear and front screws 22 and 23 thus abutting against the rear and front, respectively, sides of said bar 26. The blocking of the angular position of the bar 26 is achieved by screwing both screws 22 and 23 until abutment against said bar 26. It is noted that the orientation of said screws 22 and 23 is perpendicular to the orientation of screw 16 forming the axle of said pivoting movement.

As the skilled person will understand, bar 26 defines the swivel axis of castor wheel 6. The bar 26 is thus coaxial with the swivel axis of the castor wheel. The angular position of the bar 26 and thereby of the entire castor wheel assembly 12 is conveniently achieved by unscrewing one of the screws 22 and 23, as desired, and thereafter tightening the respective other of said two screws, so that the bar 26 is again completely blocked between said two screws 22 and 23.

As has been mentioned above, the upper section of the bar 26 has a substantially rectangular cross-section. The front and rear sides of said upper section form the smallest sides of said rectangular cross section of bar 26, which sides being preferably substantially plane. Said screws 22 and 23 abut, in the blocked position, against said front and rear sides of said upper section. The other two sides of said rectangular bar are the left and right sides. As Figure 3 is a central, longitudinal and vertical cross-section through the frame-and-castor wheel assembly, the bar 26 is also seen in cross-section. Therefore, neither the left nor the right side of the bar 26 is seen directly, in elevation view, but these sides correspond to the cross-sectional view of bar 26 in Figure 3.

It is noted that the housing 18 comprises rigid and non-adjustable structural elements that block the movement of bar 26 in any undesired direction or any direction not required for the adjustment referred to in this specification. In particular, the bar 26 is blocked from any translating, pivoting and/or any rotating movement toward any one of the right or the left sides. There are two lateral wall-building structures or walls 28 in said housing 18, which form a cage for said bar 26. In Figure 2, the top end of the lateral right of said wall building structures can be seen through the opening 17 in housing 18 (the cap on top of housing 18 being omitted) and is designated with reference numeral 28. Also in Figure 3, the upper end of the right wall-building structure 28 (which is not covered by bar 26) can be seen.

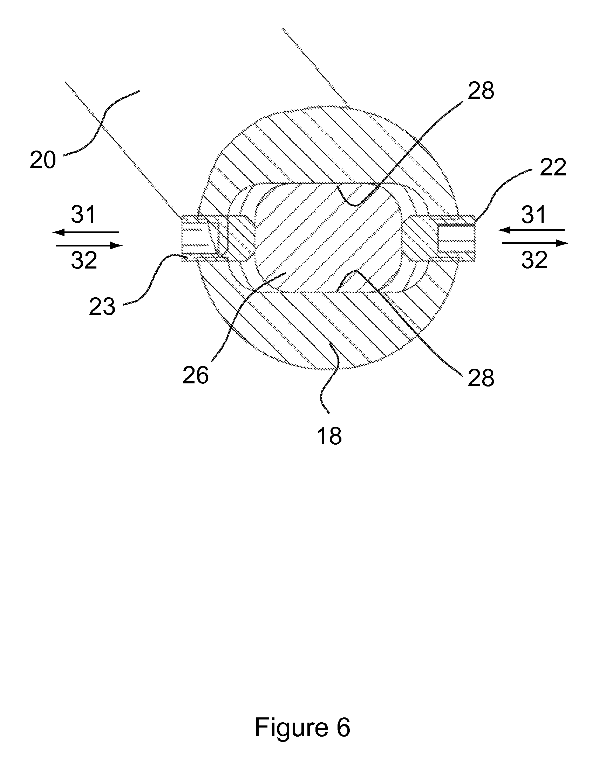

A left wall or wall-building structure is also present in an analogous position as the right wall or wall-building structure, on the left side in said housing 18. The walls 28 and their laterally confining and/or blocking role of bar 26 can best be seen from Figure 6. It can also be seen that the substantially rectangular cross-section of the upper section of bar 26 has rounded-down corners, so as to prevent any inadvertent blocking inside the housing 18 of the pivoting movement of the bar 26 during adjustment of the angular position of the castor wheel.

The walls or wall-building structures 28 rigidly confine said bar 26 in the space provided in said housing 18, so that the only freedom of movement is the pivoting movement described above, which is enabled for adjustment or disabled in case of use by loosening and/or tightening screws 22 and 23 in the appropriate manner.

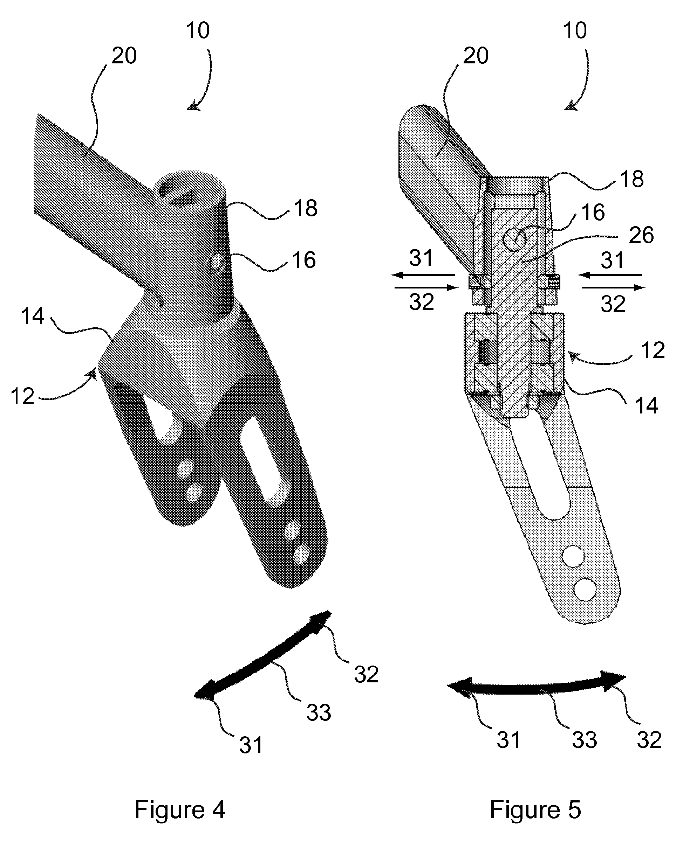

Figures 4, 5 and 6 (Figure 4 and 5 correspond generally to Figures 2 and 3) contain arrows illustrating the pivoting movement in the longitudinal direction, in a vertical, longitudinal plane, and thus the possibility of step-less adjusting the angular position of the castor wheel swivel axis. The front end 31 of the double headed arrow 33 indicates the front direction, and the rear end 32 in the rear direction. By screwing screws 23 and 22 in the corresponding direction as indicated with small arrows, the angular position of the bar 26 and thereby of the entire castor wheel assembly is adjusted.

It is noted that in the embodiment shown the angular position of bar 26, situated in housing 18, can be adjusted, in said vertical plane extending in the longitudinal direction, independently of the position of the housing 18, the latter being rigidly connected to the frame 3 and being part of the latter. Accordingly, adjustments on the wheelchair changing the position of the frame with respect to a constant reference, such as horizontal ground level, will also change the position of the housing 18. In the embodiment shown, housing 18 is a hollow cylindrical (and on the outside conical) element, having thus an axis. Adjustments to the wheelchair, such as adjustment of the position of the drive wheel with respect to the frame, preferably and generally only affect the position of the housing 18 in a vertical, longitudinal plane, but should not bias said housing 18 to any lateral side. This being the case, the axis of the swivel axle can be adjusted, also within a vertical, longitudinal plane, without said axle skewing to any lateral, left or right side.

Therefore, in accordance to the invention, the specific frame structure to which the castor wheel assembly 12 is attached, is preferably situated in a vertical, longitudinal (rear-to-front) plane, so that the castor wheel assembly 12, including the structure representing the castor wheel swivel axle (here: bar 26), can simply be pivoted in said vertical, longitudinal plane and then blocked in a desired angular position.

Following the adjustment of the wheelbase of a wheelchair, as described, for example, in EP 10 193680.5, the castor wheel swivel axis may be different from vertical, for example said axis being skipped to the front (the lower extremity of the axis being skipped backwards). The adjustment of the angular position of the castor wheel swivel axis may be achieved by skipping backwards the entire castor wheel assembly and in particular the castor wheel swivel axle, formed by the lower section of bar 26. In order to do so, front screw 23 is unscrewed in the direction 31 and rear screw 22 is further inserted by screwing into housing 18, so as to clamp bar 26 again tightly between the internal ends of screws 23 and 23.

If the correction needs to be done in the opposed direction, screw 22 is first unscrewed (direction 32), its central end thereby being translationally displaced in the rear direction, and, once a suitable correction achieved, front screw 23 is screwed deeper into housing 18, so as to push the end of screw 23 in abutment with bar 26 and restraining bar 26 in the desired position.

It is noted that while screws or bolt and nuts are disclosed as suitable means for attachment, as axle forming structures and as blocking mechanisms or structures, any other suitable mechanism or structure, fastener, axle, or blocker may be used. For example, fastening may be achieved by welding or clip mechanisms, by gluing or using any suitable connecting structure. A blocking mechanism may be based on hand-turnable wheels or levers or other devices, made of metal or plastic for example, that may be manipulated by hand by the user, for example.

## Claims

1. A wheelchair (1) in which the angular position of a swivel axis of a castor wheel (6) with respect to a frame element (18) of the wheelchair is adjustable in a continuous, step-less manner, wherein a transversal axle (16) provides a pivotal connection of a castor wheel assembly (12) to said frame element (18), thereby allowing pivoting of the assembly in a substantially vertical plane extending in a rear-to-front direction, wherein at least one adjustable blocking mechanism (22, 23) is provided so as to prevent said assembly from pivoting in said vertical plane and so as to achieve an adjustment of the angular position of said castor wheel swivel axis, **characterized in that** said blocking mechanism (22, 23) abuts against a bar (26) that is part of said castor wheel assembly (12), said bar defining the swivel axis of the castor wheel (6), thereby at least partially preventing said assembly from pivoting in said vertical plane and **in that** said blocking mechanism (22, 23) comprises a rear screw (22) and a front screw (23), each of said screws (22, 23) being inserted inside a thread provided in said frame element (18), said screws (22, 23) being arranged so as to be coaxial and so that the heads of said screws (22, 23) are oriented in opposed directions, the free ends of said screws (22, 23) abutting against said bar (26) of said castor wheel assembly (12).

2. The wheelchair of claim 1, wherein said frame element (18) to which said castor wheel assembly (12) is adjustably connected comprises a housing (18) rigidly connected to the frame (3) of the wheelchair, wherein said bar (26) is adjustably harboured in said housing (18).

3. The wheelchair of claim 1 or claim 2, wherein said bar (26) is rotably connected to a fork (14) of the castor wheel and comprises an opening (30) through which said transversal axle (16) passes, thereby connecting the castor wheel assembly (12) to the frame element (18).

4. The wheelchair of any one of the preceding claims, wherein said at least one blocking mechanism (22, 23) is configured to position said castor wheel assembly (12) alternatively in a blocked position, wherein said castor wheel assembly (12) is prevented to pivot in said vertical plane extending in the rear-to-front direction, and in an at least partially unblocked position, wherein said castor wheel assembly (12) is free to pivot at least to some extent in said vertical plane extending in the rear-to-front direction.

5. The wheelchair of any one of claims 2 and 3, wherein said bar (26) comprises two substantially flat, left and right, opposed sides, said sides respectively abutting against left and right wall-building structures (28) of said housing element (18) so that said bar is blocked from rotation, pivoting and/or translation toward any one of the right or the left sides.

## Patentansprüche

1. Rollstuhl (1), bei dem die Winkelposition einer Schwenkachse einer Rolle (6) im Verhältnis zu einem Rahmenelement (18) des Rollstuhls in einer kontinuierlichen, stufenlosen Weise einstellbar ist, wobei eine Querachse (16) für eine Schwenkverbindung einer Rollenanordnung (12) mit dem Rahmenelement (18) sorgt, so dass die Anordnung in einer im Wesentlichen vertikalen Ebene, die in einer Richtung von hinten nach vorne verläuft, schwenkbar ist, wobei mindestens ein einstellbarer Blockiermechanismus (22, 23) vorgesehen ist, um ein Schwenken der Anordnung in der vertikalen Ebene zu verhindern und so eine Einstellung der Winkelposition der Rollenschwenkachse zu erzielen, **dadurch gekennzeichnet, dass** der Blockiermechanismus (22, 23) an eine Stange (26) angrenzt, die Teil der Rollenanordnung (12) ist, wobei die Stange die Schwenkachse der Rolle (6) definiert, wodurch mindestens teilweise ein Schwenken der Anordnung in der vertikalen Ebene verhindert wird, und dass der Blockiermechanismus (22, 23) eine hintere Schraube (22) und eine vordere Schraube (23) umfasst, wobei jede der Schrauben (22, 23) in das Innere eines im Rahmenelement (18) vorgesehenen Gewindes eingreift, wobei die Schrauben (22, 23) so angeordnet sind, dass sie koaxial verlaufen und dass die Köpfe der Schrauben (22, 23) in entgegengesetzten Richtungen angeordnet sind, wobei die freien Enden der Schrauben (22, 23) an die Stange (26) der Rollenanordnung (12) angrenzen.

2. Rollstuhl nach Anspruch 1, bei dem das Rahmenelement (18), mit dem die Rollenanordnung (12) einstellbar verbunden ist, ein Gehäuse (18) umfasst, das starr mit dem Rahmen (3) des Rollstuhls verbunden ist, wobei die Stange (26) einstellbar im Gehäuse (18) eingegliedert ist.

3. Rollstuhl nach Anspruch 1 oder Anspruch 2, bei dem die Stange (26) drehbar mit einer Gabel (14) der Rolle verbunden ist und eine Öffnung (30) umfasst, durch die die Querachse (16) verläuft, wodurch die Rollenanordnung (12) mit dem Rahmenelement (18) verbunden ist.

4. Rollstuhl nach einem der vorstehend aufgeführten Ansprüche, bei dem der mindestens eine Blockiermechanismus (22, 23) so konfiguriert ist, dass er die Rollenanordnung (12) alternativ in einer blockierten Position, in der die Rollenanordnung (12) daran gehindert wird, in der vertikalen Ebene, die sich in der von hinten nach vorne verlaufenden Richtung erstreckt, zu schwenken, sowie in einer mindestens teilweise nicht blockierten Position positioniert, in der die Rollenanordnung (12) mindestens in einem gewissen Umfang in der vertikalen Ebene, die sich in der von hinten nach vorne verlaufenden Richtung erstreckt, frei schwenken kann.

5. Rollstuhl nach einem der Ansprüche 2 und 3, bei dem die Stange (26) zwei im Wesentlichen flache, linke und rechte gegenüberliegende Seiten umfasst, wobei die Seiten an linke bzw. rechte wandbildende Strukturen (28) des Gehäuseelements (18) angrenzen, so dass die Stange gegen eine Drehung, Schwenkung und/oder Translationsbewegung hin zu irgendeiner der rechten oder der linken Seite blockiert ist.

## Revendications

1. Fauteuil roulant (1) dans lequel la position angulaire d'un axe de pivotement d'une roulette pivotante (6) par rapport à un élément de châssis (18) du fauteuil roulant est ajustable de manière continue et progressive, un arbre transversal (16) formant une liaison pivotante entre un ensemble de roulette pivotante (12) et ledit élément de châssis (18), ceci permettant le pivotement de l'ensemble dans un plan essentiellement vertical s'étendant dans une direction arrière vers avant, au moins un mécanisme de blocage ajustable (22, 23) étant prévu afin d'empêcher ledit ensemble de pivoter dans ledit plan vertical et afin d'obtenir un ajustement de la position angulaire dudit axe de pivotement de la roulette pivotante, **caractérisé en ce que** ledit mécanisme de blocage (22, 23) est en appui contre une barre (26) qui fait partie dudit ensemble de roulette pivotante (12), ladite barre définissant l'axe de pivotement de la roulette pivotante (6), ceci empêchant au moins partiellement ledit ensemble de pivoter dans ledit plan vertical et **en ce que** ledit mécanisme de blocage (22, 23) comprend une vis arrière (22) et une vis avant (23), chacune desdites vis (22, 23) étant insérée dans un filet formé dans ledit élément de châssis (18), lesdites vis (22, 23) étant disposées de façon à être coaxiales et de façon à ce que les têtes desdites vis (22, 23) soient orientées dans des directions opposées, les extrémités libres desdites vis (22, 23) étant en appui contre ladite barre (26) dudit ensemble de roulette pivotante (12).

2. Fauteuil roulant selon la revendication 1, dans lequel ledit élément de châssis (18) auquel ledit ensemble de roulette pivotante (12) est lié de manière ajustable comprend un logement (18) lié de manière rigide au châssis (3) du fauteuil roulant, ladite barre (26) étant reçue de manière ajustable dans ledit logement (18).

3. Fauteuil roulant selon la revendication 1 ou la revendication 2, dans lequel ladite barre (26) est liée à rotation à une fourche (14) de la roulette pivotante et comprend une ouverture (30) à travers laquelle passe ledit arbre transversal (16), ceci liant l'ensemble de roulette pivotante (12) à l'élément de châssis (18).

4. Fauteuil roulant selon l'une quelconque des revendications précédentes, dans lequel ledit ou lesdits mécanismes de blocage (22, 23) est/sont configuré(s) afin de placer ledit ensemble de roulette pivotante (12) soit dans une position bloquée, dans laquelle ledit ensemble de roulette pivotante (12) est dans l'impossibilité de pivoter dans ledit plan vertical s'étendant dans la direction arrière vers avant, soit dans une position au moins partiellement débloquée, dans laquelle ledit ensemble de roulette pivotante (12) est libre de pivoter au moins dans une certaine mesure dans ledit plan vertical s'étendant dans la direction arrière vers avant.

5. Fauteuil roulant selon l'une quelconque des revendications 2 et 3, dans lequel ladite barre (26) comprend deux côtés, gauche et droit, opposés, essentiellement plats, lesdits côtés étant respectivement en appui contre des structures formant parois (28) gauche et droite dudit élément formant logement (18) de telle sorte que ladite barre soit bloquée en termes de rotation, de pivotement et/ou de translation vers l'un quelconque des côtés droit et gauche.
